# EUROPEAN PATENT APPLICATION

(11) **EP 2 336 472 A1**
(43) Date of publication of application: **22.06.2011**
(21) Application number: 10189370.9
(22) Date of filing: 29.10.2010
(51) Int. Cl.: E06B 3/263, F24D 3/14

(54) **Metallic frame for doors and windows with thermal break by a water radiator**

(30) Priority: 02.11.2009 AR P100004222 U
(71) Applicant: Garcia, Gustavo Alejandro, Salsipuedes Provincia de Cordoba (AR)
(72) Inventor: Garcia, Gustavo Alejandro, Salsipuedes Provincia de Cordoba (AR)
(74) Representative: Robba, Pierpaolo

(57) **Abstract**

The present invention relates to a metalwork frame or profile for doors and windows with thermal break having a pre-installed water heater inside the metalwork frame of the opening, specifically forms an integral part of the internal lid of the opening and is housed inside the internal air chamber of the frame, with a central water pipe and a plurality of fins around it, forming together a radiator with a convection chamber within the frame. The lid of the frame on its sides includes a series of small vents aligned longitudinally along the profile to allow the diffusion of heat. The profile includes a mechanism having two locking positions within the frame internal air chamber and is interconnected inside the frame perimeter by threaded elbows and to the heating system by the building's hot water radiators or the water heater of the building, so that the radiator installed inside the frame generates heat inside the internal frame air chamber and by convection through the vents is transmitted over the opening and by thermal conduction of the frame, the temperature is transmitted to the glass panel of the opening glass producing the thermal break.

## Description

The present invention relates to a metallic frame for doors and windows with thermal break by a water radiator, with the objective being to understand the present invention so that it can be easily placed into practice, a precise description of a preferred embodiment may be given in the following paragraphs, referring to the attached illustrative drawings, by demonstrative example but not limited to, and which components may be selected from various equivalents without departing from the principles established by the present invention.

### TITLE AND FIELD OF THE INVENTION

The present invention relates mainly to the thermal insulation of buildings, especially in the field of metalwork frames for doors and windows with thermal break, preferably made of aluminium or other alloys. The metalwork frame for doors and windows includes an integral water radiator that is connected to the water heating system of the building.

### STATE OF THE ART AND PROBLEMS TO SOLVE

The existing problem is that the major part of the heat loss in an isolated exterior environment, whatever their size, is through the openings, doors and windows with glass panels, because during the installation of hot water heat radiators, they are installed underneath the glass windows in order to counteract the temperature flow through the glass, with the undesired effect of a current in "V" that undermines the performance of the heater by a cold air cushion in front of the glass, by the external temperature flow.

The technical problem objective of this invention is to prevent the direct contact between the interior and exterior zones of the building, thereby eliminating the thermal transmission between the two environments, known as thermal break, through an element that separates them, whether a door or a window. Various types of metalwork are known for doors and windows, being the most widely used, the aluminium openings of thermal break (RPT) and the double glazed sealed (DVH), to counteract the temperature loss and improve the environment thermal insulation.

While aluminium is a good thermal conductor, to break the thermal bridge in openings constructed of such material, an insulating material is used, such as a rod shaped fibre glass reinforced polyamide to join the aluminium profiles, interior and exterior of the sheet or frame opening, and the use of double glazed sealed in the glass panels, keeping thermally insulated the interior section from the external section of the building in regard specifically to the frame.

The proposed solution by the present invention solves the problem of thermal transmission through the doors and windows with glass panels by the installation of a water heater device inside the opening frame, specifically inside the air internal chamber of the internal frame profile and connected to the system of water heater radiators of the building or to the existing water heating system of the building, in such a way that as the radiator as installed inside the framework generates heat inside its internal air chamber and by convection through vents longitudinally arranged on the interior face of the frame, the heat is transmitted over the perimeter of the opening, and by thermal conduction of the frame, the heat is transmitted to the glass panels of the opening producing a thermal break and forming a hot air flow from the frame perimeter over the surface of the opening glass panel, eliminating the thermal transmission between the exterior and interior environment. The surface of the openings is related to the surface of the environment, according to lighting and ventilation, among other factors, the metalwork frame with integrated water heater reduces energy consumption optimizing the performance of the existing water radiator heating system, with a higher temperature distribution and superior acoustic isolation from the environment and allows the replacement of radiators, which because of functional or aesthetic reasons cannot stay near openings such as sliding doors or windows, among others. In the case of reduced dimension environments, such as a single room environment, the elimination of thermal transmission is allowed without having to install conventional radiators, connecting to the multi-purpose water heating system of the double water-heater kind or of the immersion heater kind, since otherwise makes it unfeasible. In regard to large areas such as glass buildings (DVH) with aluminium metalwork frame, allows to optimize the heating and reduce the heat loss in both the frames and the glass surface.

### BRIEF DESCRIPTION OF THE INVENTION

The present invention relates to a metalwork frame or profile for doors and windows with thermal break having a pre-installed water heater inside the metalwork frame of the opening, specifically forms an integral part of the internal lid of the opening and is housed inside the internal air chamber of the frame, with a central water pipe and a plurality of fins around it, forming together a radiator with a convection chamber within the frame. The lid of the frame on its sides includes a series of small vents aligned longitudinally along the profile to allow the diffusion of heat. The profile includes a mechanism having two locking positions within the frame internal air chamber and is interconnected inside the frame perimeter by threaded elbows and to the heating system by the building's hot water radiators or the water heater of the building, so that the radiator installed inside the frame generates heat inside the internal frame air chamber and by convection through the vents is transmitted over the opening and by thermal conduction of the frame, the temperature is transmitted to the glass panel of the opening glass producing the thermal break.

### DETAILED DESCRIPTION OF THE INVENTION

The present invention relates to a metalwork frame or profile for doors and windows with thermal break comprising a water radiator installed inside the frame metalwork profile of the opening frame, according to Figures 1 and 2, specifically is an integral part of the inner lid of the opening and is housed inside the internal air chamber of the frame, with a central water pipe having a plurality of fins around it, forming together a radiator with a convection chamber inside the internal air chamber of the frame. According to Figure 3 the sides of the lid of the frame includes a series of small vents longitudinally aligned along the profile to allow the heat diffusion as well as its rim. According to Figure 4 the frame lid profile has a locking mechanism with two locking positions inside the frame internal air chamber frame. According to Figure 5 (closed) and Figure 6 (open) and is interconnected inside the frame of the opening by threaded elbows according to Figure 7 and to the hot water radiator heating system of the building or the building's water heater (Figure 8) so the radiator being installed inside the frame generates heat inside the frame's internal air chamber and by convection through the vents, the heat is transmitted over the opening, and by thermal conduction of the frame the temperature is transmitted to the glass panel of the opening producing thermal break. So the frame with the water radiator in an opening may be connected directly to the building's water heater, or in other installation form, may be interconnected with the rest of the frames for openings having water radiator and through them to the building's water heaters or to other hot water heating devices of the building, joining the building's heating system.

### OPERATION

Having established the various components of a version of the present invention, developed to explain its nature, the description is complemented with the functional and operational relationship of the parts and the results they provide.

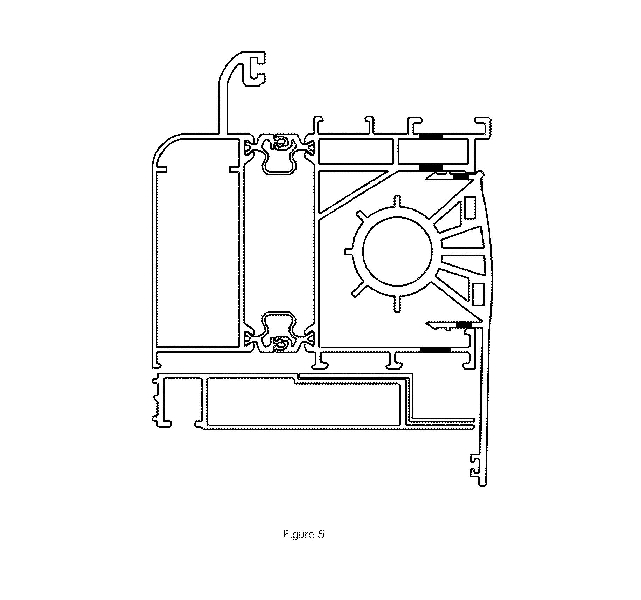

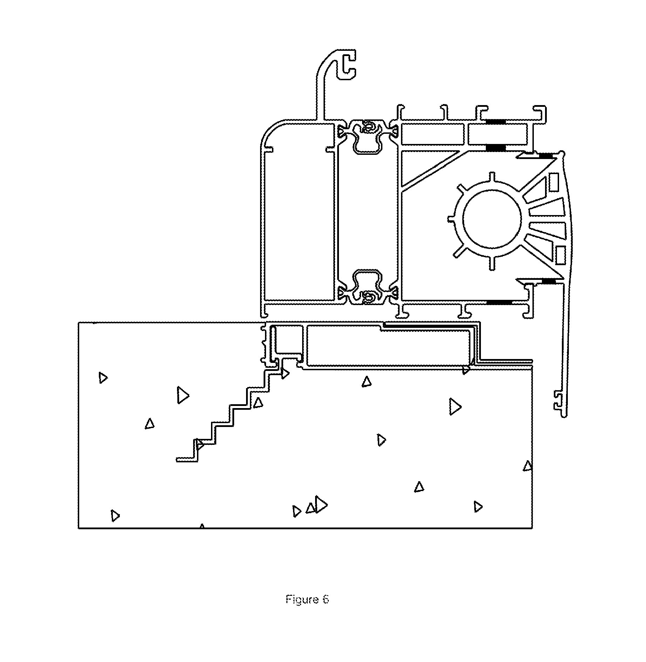

Once the metalwork of doors or window openings is installed, the metalwork frame with integrated water radiator, previously connected to the water heating system of the building, the closing device of the opening frame lid is regulated according to the desired position in the closed position (as shown by Figure 5) complete closure without internal ventilation so that the vents are arranged within the frame generating the most heat circulation in the inner chamber of the frame or in the open position (as shown by Figure 6) where vents are arranged on the surface of the frame achieving greater convection, circulating a hot air flow the frame perimeter to the surface of the glass panel.

The frame of each opening of the metalwork with integrated water radiator may interconnect among them and also is connected to the water radiator system of the building or directly to the building's water heater and its temperature is regulated in conjunction with it. In the same manner, the radiator of each frame opening may be connected directly to the building's water heater or to an immersion or double water heater.

### DESCRIPTION OF THE FIGURES

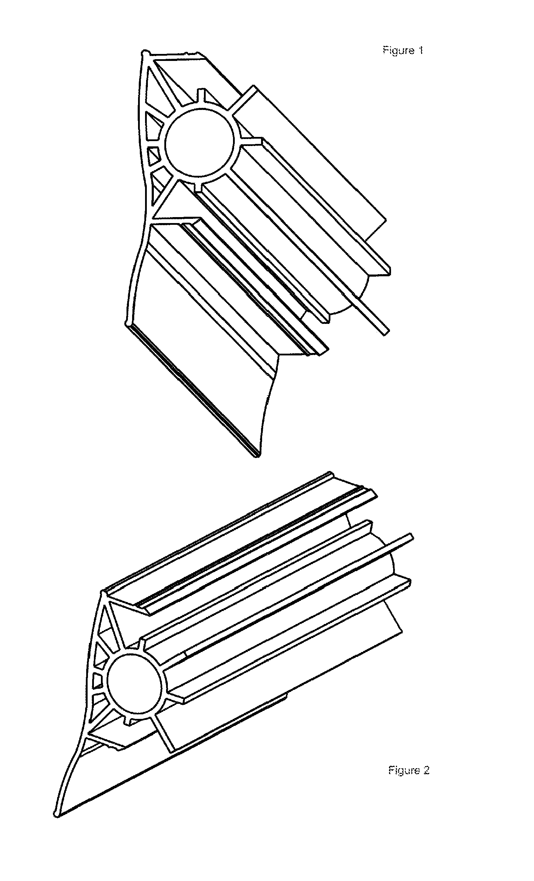

Figure 1) is a side view before the machining of the profile and cross sectional view of the internal frame showing a plurality of fins around the central water pipe forming a star and some of them linked to the lid of the frame.
Figure 2) is a view of the frame of Figure 1) in another position.

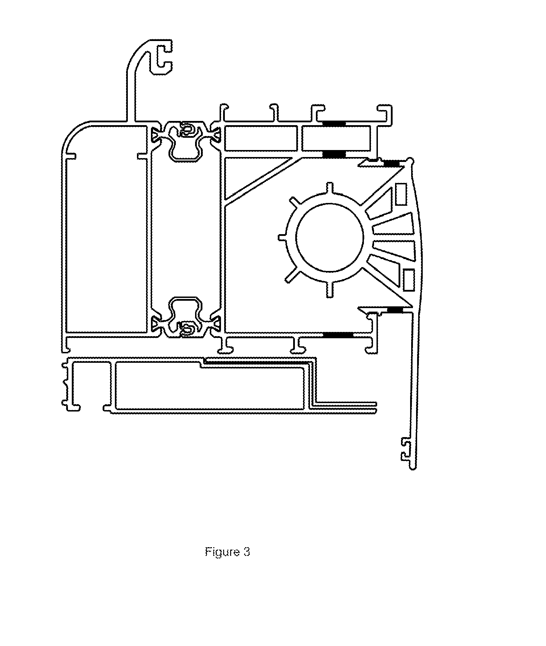

Figure 3) is a detail of a cross sectional view in mounted condition of the assembly of the internal frame or lid and profile of the counterlid forming the internal air chamber of the frame and its mounted assembly with the lid open.

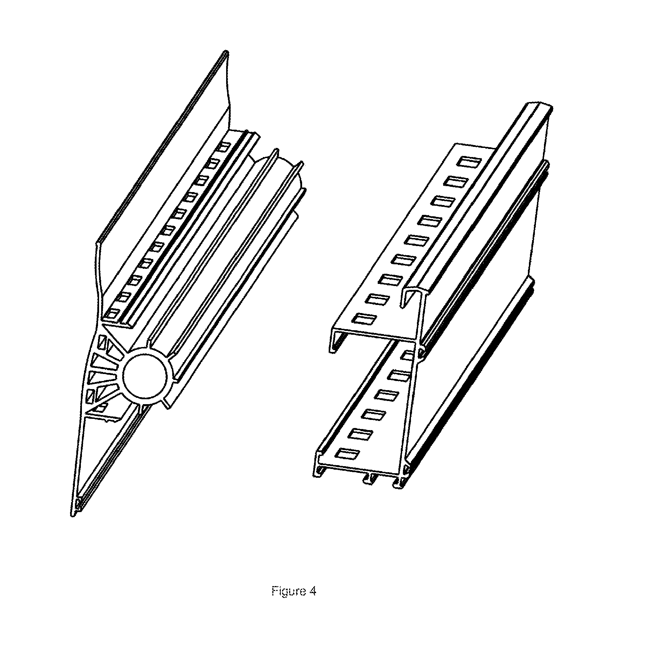

Figure 4) is a side view of the inner frame profile (or lid) showing the vents located along the length and in position facing the outer frame profile (counter lid) where it is located (with the same vents) inside the internal air chamber of the framework, in a prearmed position.
Figure 5) is a cross sectional view of the frame of Figure 3) showing the lid closed.
Figure 6) is a cross sectional view of the frame of Figure 3) showing the lid open and its position regarding the wall where it is fixed.

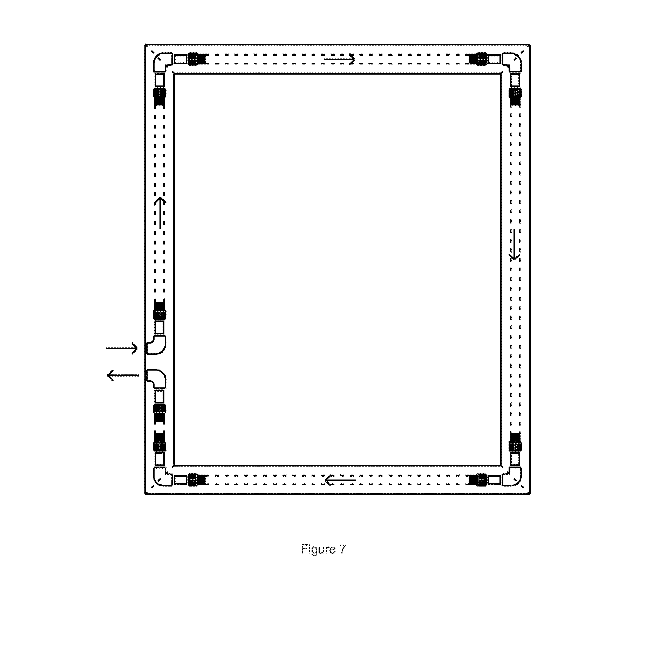

Figure 7) shows the details of the internal scheme of the radiator inside an opening and the joining of all water pipes and elbows connection and details of the input and output water elbows.

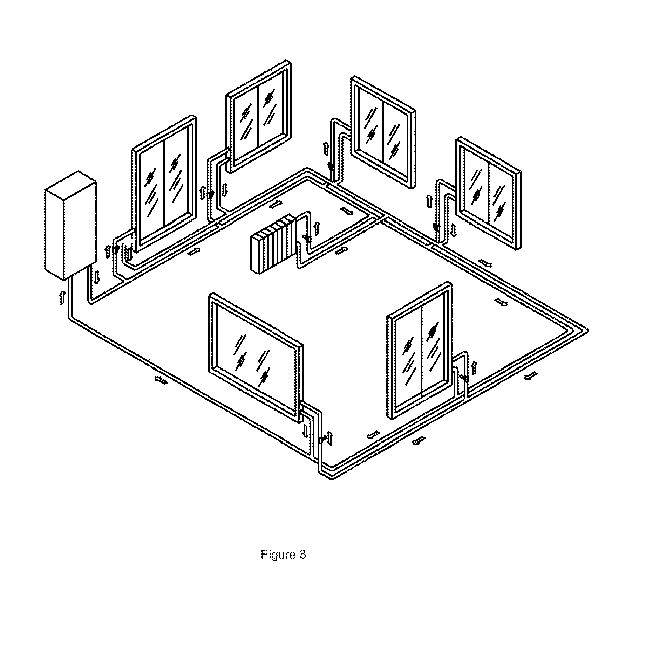

Figure 8) shows details of the full assembly of all interconnected openings between them and the water radiator system.

### References to the process of assembling the metalwork frame with a water radiator

- To produce the profile a tempered aluminum alloy T063 is used, by press extrusion and machining, and once the profile is obtained; the sides are machined to outline the vents.
- Produce the profile as a whole (external profile, plus polyamide rods, plus inner profile).
- Proceed to assemble the frame on all four corner joints through using a square and accessories following the manufacturer's instructions.
- Proceed to assemble the four corner joints of the radiator.
- Screw the male coupling tube to the corners of the radiator pipe and to the radiator tube at the water inlet and outlets.
- Weld nipples and elbows at the corners by heat fusion, in the water inlets and outlets, and place the alignment bracket.
- Assemble the group of glass panels according to the manufacturer's instructions, with their respective plush, accessories, hardware, wheels, anti-noise, and seals to ensure hermeticity.
- Proceed to place the radiator in the respective chamber.
- Proceed to connect the inlet and outlet to their respective curb valve and holder to the hot water heating system radiators in the building or the building's water heater.
- Testing under rules normally used for heating radiators.

Having described and determined the nature and scope of the present invention, its scope and the preferred way in which it can be put into practice, it is declared that what is claimed as invention and propriety is:

## Claims

1. A metalwork frame for doors and windows with thermal break for water radiator, **characterized in that** it comprises a water conduit into the inner chamber of the frame, a plurality of fins, and is connected to the water heating system of the building.

2. A metalwork frame for doors and windows with thermal break for water radiator according to claim 1 **characterized in that** said radiator has a plurality of vents at the top of the frame.

3. A metalwork frame for doors and windows with thermal break for water radiator according to claim 1 **characterized in that** said radiator is connected together by threaded/fusion elbows.

4. A metalwork frame for doors and windows with thermal break for water radiator according to claim 1, **characterized in that** said radiator has an adjustable locking device having two positions within the internal air chamber and in respect to the frame.

5. A metalwork frame for doors and windows with thermal break for water radiator according to claim 1 **characterized in that** said radiator is connected to the water heating radiators in the building.

6. A metalwork frame for doors and windows with thermal break for water radiator according to claim 1, wherein said radiator is detachable from the frame.

7. A metalwork frame for doors and windows with thermal break for water radiator according to claim 1 **characterized in that** said radiator is interconnected to the radiator of other opening frames and to the building heating system.

8. A metalwork frame for doors and windows with thermal break for water radiator according to claim 1 **characterized in that** said radiator is interconnected to the radiator of other openings frames and to the building water heater.

9. A metalwork frame for doors and windows with thermal break for water radiator, **characterized in that** it comprises a water conduit inside the frame inner chamber, a plurality of fins, a plurality of vents at the top of the frame, an adjustable locking device having two positions within the internal air chamber, and is connected directly to the building's water heater.
